# EUROPÄISCHE PATENTSCHRIFT

(11) **EP 3 358 331 B1**
(45) Veröffentlichungstag und Bekanntmachung des Hinweises auf die Patenterteilung: **19.02.2020**
(21) Anmeldenummer: 18152982.7
(22) Anmeldetag: 23.01.2018
(51) Int. Cl.: G01M 5/00, G01B 5/14, G01B 5/30, G01B 7/16

(54) **EINRICHTUNG ZUM ERFASSEN VON VERÄNDERUNGEN DES RÄUMLICHEN ABSTANDES ZWISCHEN ZWEI STATIONÄR VERANKERTEN MESSPUNKTEN**
DEVICE FOR RECORDING CHANGES IN THE SPATIAL DISTANCE BETWEEN TWO STATIONARY ANCHORED MEASURING POINTS
DISPOSITIF DE DÉTECTION DE CHANGEMENTS DE DISTANCE SPATIALE ENTRE DEUX POINTS DE MESURE ANCRÉS DE MANIÈRE FIXE

(30) Priorität: 02.02.2017 DE 102017102040
(43) Veröffentlichungstag der Anmeldung: 08.08.2018
(73) Patentinhaber: Aartesys AG, 2501 Biel (CH)
(72) Erfinder: Altwegg, Viktor, 8634 Hombrechtikon (CH)
(74) Vertreter: Sroka, Peter-Christian

(56) Entgegenhaltungen:
- CN-A- 103 913 145
- DE-A1-102010 024 932
- FR-A1- 2 784 178
- JP-A- 2002 243 403
- US-A1- 2014 012 517

## Beschreibung

Die Erfindung betrifft eine Einrichtung gemäß Patentanspruch 1. Eine solche Einrichtung kann z.B. eingesetzt werden, um Risse in Bauwerken, z.B. einer Stützmauer, einer Brücke oder dergleichen, oder Felsspalten (Felsrisse) permanent zu überwachen und im Fall einer Abstandsveränderung, insbesondere Abstandsvergrößerung, des Risses bzw. Spaltes einen Alarm auslösen.

Bestehende Systeme, bei denen es sich in Abhängigkeit von dem jeweiligen Einsatzgebiet um sogenannte Extensometer, Dehnungssensoren, Fissurometer, Crackmeter, Rissmonitore, Spaltenmonitore usw. handelt, beruhen auf dem Prinzip der Längenmessung mittels eines beispielsweise zwischen den beiden stationär verankerten Messpunkten verankerten Längenmessgerätes.

Nachteile bekannter mechanischer oder elektrischer Systeme:
Mechanische Systeme:
   - regelmäßige Ablesung notwendig → nicht permanent überwacht
Elektrische Systeme:
   - ständige Zuführung von elektrischer Energie, notwendig für die Messung und Auswertung des Messaufnehmers → externe Stromversorgung mit Batterie, Solarpanel oder anderweitiger Stromversorgung
   - Messaufnehmer und Auswerte-Einheit sind zwei verschiedene Komponenten, welche zudem örtlich voneinander getrennt montiert sind → Kabelverbindung notwendig, welche anfällig ist und daher auch geschützt werden muss

Eine in der US 2011/0202289 A1 beschriebene und in den Figuren 8A bis 8C dargestellte Einrichtung enthält eine auf einer Basis installierte Wippe 806, die bei einer Längenänderung des Bauteils 802 eine translatorische Bewegung in eine Schwenkbewegung transformiert, ohne feststellen zu können, an welchen Stellen des Bauteils 802 u.U. eine Rissbildung aufgetreten ist, oder eine Veränderung der Breite eines bereits vorhandenen Risses stattgefunden hat.

Eine in der FR 2 784 178 A1 beschriebene Messvorrichtung zum Erfassen einer Veränderung des räumlichen Abstandes zwischen zwei stationären Halterungen enthält eine zwischen den beiden Halterungen befestigte Teleskopstange, in die ein Nonius zur Messung bzw. Anzeige einer translatorischen Abstandsveränderung zwischen den beiden Halterungen integriert ist. Es sind zwei weitere Nonien vorgesehen, um Höhenänderungen und seitliche Abstandsänderungen zwischen den beiden Halterungen zu erfassen und anzuzeigen. Obwohl die Teleskopstange mit ihrem einen Ende mittels eines Kugelgelenks und mit ihrem anderen Ende mittels eines Walzengelenks schwenkbar gelagert ist, werden hier nur translatorische Abstandsänderungen erfasst und ausgewertet.

In der CN 103913145 A und in der JP 2002-243403 A sind Einrichtungen zur Messung /Überwachung von Rissbreitenänderungen beschrieben. Bei diesen Einrichtungen werden Hebel und Hebelarme verwendet, wobei gemäß CN 103913145 A ein Schwingseilsensor verwendet wird, um die Spannung in den Hebelarmen zu erfassen. Die JP 2002-243403 A benutzt mechanische Anzeigeinstrumente.

Felsstürze oder Steinschlag sind in der Regel momentane, sich schnell abwickelnde Ereignisse, die sich aber auch durch Veränderungen in der Felsstruktur, insbesondere Felsrisse, ankündigen können.

Der Erfindung liegt die Aufgabe zugrunde, ein robustes und vorzugsweise permanent wirksames Abstandüberwachungssystem gemäß dem Oberbegriff des Patentanspruch 1 so zu gestalten bzw. zu konzipieren, dass beim Messbeginn, d.h. bereits bei geringsten Veränderungen, insbesondere Vergrößerungen des Abstandes, die Auflösung möglichst groß ist, um kleinste Abstandsveränderungen trotz eines großen Messbereichs zu erfassen, um sich soweit wie möglich auf das Ereignis eines Felssturzes bzw. Steinschlags oder einer Bauwerkschädigung vorbereiten zu können.

Zur Lösung dieser Aufgabe dienen die Merkmale des Kennzeichens des Patentanspruchs 1.

Eine derartige Einrichtung hat beim Messbeginn eine große Auflösung, so dass kleinste Abstandsveränderungen im Sub-mm-Bereich trotz eines großen Messbereichs erkannt bzw. erfasst werden können. Anhand der vorgegebenen Einbaulage des Sensors und der Abweichung des Sensors von der vorgegebenen Einbaulage infolge der Kippbewegung kann der Wert der gradlinigen Bewegung bestimmt werden.

Die erfindungsgemäß verwendete Mechanik hat folgende Vorteile:
- Riss- bzw. Spaltenmessung im Sub-Millimeter-Bereich;
- einfache Installation, da nur zwei Messstellen;
- flexible Installation, da der Abstand zwischen den Messstellen an die örtlichen bzw. räumlichen Gegebenheiten angepasst werden kann;
- es ist keine Verkabelung notwendig und gemäß einer bevorzugten Ausführungsform auch keine externe Energieeinspeisung;
   und zwar kombiniert mit
- einem an sich bekannten hochauflösenden g-Sensor mit vorzugsweise großer Funkreichweite und
- einer vorzugsweise mindestens 10 Jahre Batterie-Autonomie

Gemäß einer bevorzugten Ausführungsform der erfindungsgemäßen Einrichtung ist vorgesehen, dass die Stangen Gewindestangen sind.

In den Sensor ist vorzugsweise ein Sender zur Abgabe eines Alarmsignals an eine Überwachungseinheit bei Erfassen einer Abweichung des Sensors von der vorgegebenen Einbaulage integriert.

Weitere bevorzugte Ausführungsformen der Erfindung sind in Unteransprüchen behandelt.

Die Erfindung wird im Folgenden anhand der Zeichnung für eine Felsspalt- oder Felsriss-Erfassungseinrichtung näher beschrieben.
- Figur 1: zeigt in schematisierter Darstellung eine Seitenansicht der erfindungsgemäßen Einrichtung;
- Figur 2: zeigt in etwas vergrößerter Darstellung eine Draufsicht auf die Einrichtung gemäß Figur 1;
- Figur 3: zeigt in vergrößerter Darstellung eine erste Ausführungsform der erfindungsgemäß verwendeten Gelenkeinheiten;
- Figur 4: zeigt eine zweite Ausführungsform der erfindungsgemäß verwendeten Gelenkeinheiten in Form einer Scharnierplatte;
- Figur 5: zeigt ausschnittsweise den Einsatz der in Figur 4 dargestellten Scharnierplatte

In einer nur andeutungsweise dargestellten Felsstruktur A mit einem Felsriss B ist zu beiden Seiten des Felsrisses B als Messpunkt je eine Halterung in Form eines Ankerbolzen, z.B. ein Felsanker 4 in der Felsstruktur A verankert. Jeder Ankerbolzen 4 ist vorzugsweise zumindest in seinem oberen Bereich mit einem Außengewinde versehen.

An jedem Ankerbolzen 4 ist mittels der Gelenke a und b eine Stange, z.B. eine Gewindestange 2 bzw. 3 angelenkt. Die Stangen sind im Bereich des Gelenkes c gelenkig miteinander verbunden. Die eine Stange 3 trägt an ihrem Ende einen Adapter 7 für einen hochauflösenden g-Sensor, der bei einer Veränderung, insbesondere Vergrößerung des Abstandes, zwischen den beiden durch die Ankerbolzen 4 gebildeten Messpunkten und damit bei einer Abweichung des g-Sensors von der bei der Montage vorgegebenen Einbaulage anspricht und diese Abweichung misst und die erfassten Daten vorzugsweise an eine zentrale Überwachungseinheit weiterleitet.

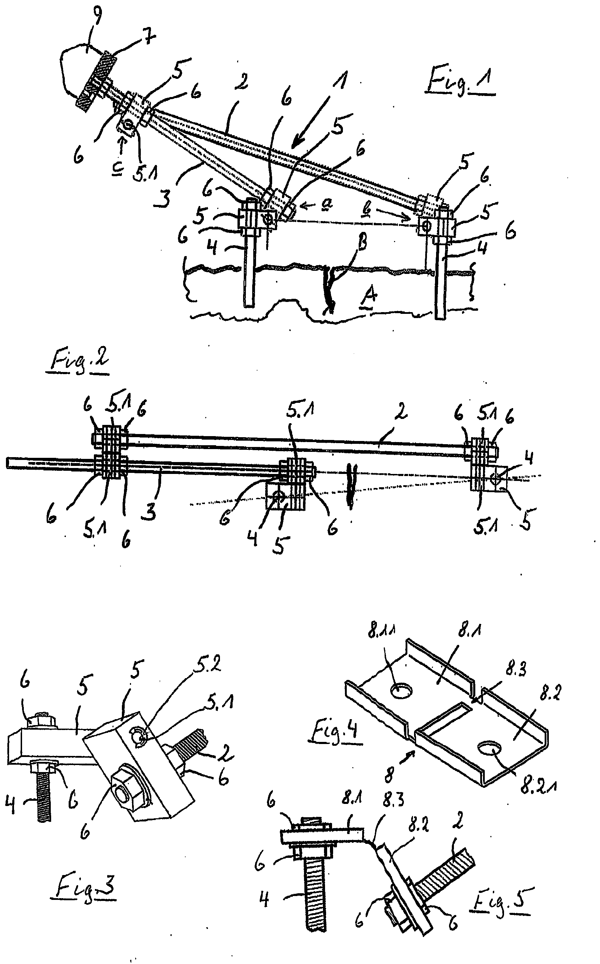

Die einzelnen Gelenke a, b und c enthalten gemäß Figur 3 jeweils zwei Gelenkblöcke 5, die, gesichert durch Seegerringe 5.2 auf einer gemeinsamen Achse 5.1 gelagert sind.

Gemäß Figur 3 ist auf jedem Ankerbolzen 4 ein durch Muttern 6 gesicherter Gelenkblock 5 befestigt. Auf jeder Stange 2 bzw. 3 ist zur Bildung der Gelenke a und b ein weiterer Gelenkblock 5, gesichert durch Muttern 6, befestigt.

Bei dem die beiden Stangen 2 und 3 gelenkig miteinander verbindenden Gelenk c ist jeweils ein Gelenkblock 5 an den beiden Stangen 2 und 3, gesichert durch Muttern 6, befestigt, siehe die Draufsicht gemäß Figur 2.

Die Figuren 4 und 5 zeigen eine abgewandelte Ausführungsform eines Gelenkes, bestehend aus einer Scharnierplatte 8 mit der zwei Scharnierplattenabschnitten 8.1 und 8.2, die durch einen Biegeabschnitt 8.3 miteinander verbunden sind. Jeder Scharnierplattenabschnitt 8.1 und 8.2 ist mit einer Bohrung 8.11 bzw. 8.21 versehen. Die Scharnierplatte 8 ist gemäß Figur 5 einerseits an dem Felsanker 4 und andererseits an der Stange 2, gesichert durch Muttern 6, befestigt.

An dem Ende der Stange 3 ist ein Adapter 7 für einen hochauflösenden g-Sensor 9 angebracht. Der g-Sensor hat vorzugsweise eine in ihn integrierte Stromversorgungsquelle, z.B. Batterie. Dieser g-Sensor 9 wird bei der Montage der Einrichtung in eine vorgegebene Einbau- bzw. Eichlage gebracht. Eine Veränderung des Abstandes zwischen den Ankerbolzen 4, insbesondere eine Vergrößerung des Felsrisses B, führt zu einer Kipp- bzw. Schwenkbewegung der beiden Stangen 2 und 3 und damit des g-Sensors 9 relativ zur Einbau- bzw. Eichlage. Diese Veränderung des Abstandes zwischen den Ankerbolzen 4 wird vorzugweise per drahtloser Kommunikation mittels eines in den g-Sensor 9 integrierten Senders an eine Überwachungseinheit durch ein entsprechendes Alarmsignal weitergeleitet.

Die anhand der Überwachung eines Felsspaltes bzw. Felsrisses beschriebene mechanische Konstruktion ist erfindungsgemäß analog auch für die Überwachung von Bauwerken verwendbar.

## Patentansprüche

1. Einrichtung zum Erfassen einer Veränderung des räumlichen Abstandes zwischen zwei stationär verankerten Messpunkten, enthaltend
- zwei im Abstand voneinander verankerte, die beiden Messpunkte bildende Halterungen und
- eine an den Halterungen befestigbare Messvorrichtung (1), die eine translatorische Veränderung des Abstandes zwischen den beiden Halterungen erfasst,
**dadurch gekennzeichnet, dass**
- die Halterungen in festem Untergrund verankerbare Ankerbolzen (4) sind,
- dass die Messvorrichtung zwei Stangen (2; 3) und einen hochauflösenden g-Sensor enthält,
- die durch ein gemeinsames Gelenkes (c) relativ zueinander schwenkbar miteinander verbunden sind,
- dass die erste Stange (2) mittels eines Gelenkes (b) an dem einen Ankerbolzen (4) schwenkbar gelagert ist,
- die zweite Stange (3) mittels eines Gelenkes (a) an dem anderen Ankerbolzen (4) schwenkbar gelagert ist,
- derart, dass die translatorische Abstandsveränderung zwischen den Ankerbolzen (4) in Kipp- und Schwenkbewegungen transformierbar sind,
- wobei der hochauflösende g-Sensor in einer vorgegebenen Einbaulage an der Messvorrichtung montiert ist.

2. Einrichtung nach Anspruch 1, **dadurch gekennzeichnet, dass** die beiden Stangen (2; 3) Gewindestangen sind.

3. Einrichtung nach Anspruch 1 oder 2, **dadurch gekennzeichnet, dass** dem g-Sensor (9) ein Sender zur Abgabe eines Alarmsignals an eine Überwachungseinheit bei Erfassen einer Abweichung des g-Sensors von der vorgegebenen Einbaulage zugeordnet ist.

4. Einrichtung nach einem der Ansprüche 1 bis 3, **dadurch gekennzeichnet, dass** der g-Sensor mittels eines Adapters (7) an der einen Stange (2) befestigt ist.

5. Einrichtung nach Anspruch 2, **dadurch gekennzeichnet, dass** die beiden Ankerbolzen (4) zumindest in ihrem oberen Bereich ein Gewinde aufweisen.

6. Einrichtung nach Anspruch 5, **gekennzeichnet durch** an den Gewindeabschnitten der Ankerbolzen (4) und an den Gewindestangen (2; 3) angebrachte Gelenkblöcke (5), die auf einer gemeinsamen Achse (5.1) gelagert sind.

7. Einrichtung nach Anspruch 6, **dadurch gekennzeichnet, dass** die Gelenkblöcke (5) gesichert durch Seegerringe (5.2) auf der gemeinsamen Achse (5.1) gelagert sind.

8. Einrichtung nach einem der Ansprüche 5 bis 7, **gekennzeichnet durch** an den Gewindeabschnitten der Ankerbolzen (4) und an den Gewindestangen (2; 3) befestigte Scharnierplatten (5), die aus zwei Scharnierplattenabschnitten (8.1 und 8.2) bestehen, die durch eine Biegestelle (8.3) gelenkig miteinander verbunden sind und jeweils eine Bohrung (8.11 bzw. 8.21) aufweisen und an den Ankerbolzen (4) und den Gewindestangen (2; 3), gesichert durch Muttern (6), befestigt sind.

9. Einrichtung nach Anspruch 1, **gekennzeichnet durch** eine spielfreie Ausführung der Gelenke.

10. Einrichtung nach einem der Ansprüche 1 bis 7, **dadurch gekennzeichnet, dass** der g-Sensor (9) hermetisch dicht ausgeführt ist.

## Claims

1. Dispositif for measuring of an alteration of the spatial distance between two points of measurement which are stationaryly anchored, containing
- two supports forming the points of measurement and being anchored spatially from each other and
- a measuring device (1) which is fastened to the supports and which measures on the translational alteration of the distance between the two supports,
**characterized in that**
- the supports are anchor bolts (4) which are anchored in the solid ground
- the measuring device contains two bars (2 ; 3) and a high definition g-sensor
- which bars have a pivotally joint relativ to each other by means of a common joint (c)
and **in that**
- the first bar (2) is pivotally mounted to one of the anchor bolts (4) by means of a joint (b)
- the second bar is pivotally mounted to the other anchor bolt (4) by means of a joint (a),
such that the translational alteration of distance between the anchor bolts (4) is transformable into tilting and pivot movements, and **in that** the high definition g-sensor is mounted to the measuring device at a predetermined position.

2. Dispositif according to claim 1, **characterized in that** the two bars (2 ; 3) are threaded bars.

3. Dispositif according to claim 1 or claim 2, **characterized in that** a transmitter is associated to the g-sensor (9) for delivering an alarm signal to a monitoring device in case that a deviation of the g-sensor is measured from the predetermined position.

4. Dispositif according to one of the claims 1 to 3, **characterized in that** the g-sensor is fastened to a bar (2) by means of an adapter (7).

5. Dispositif according to claim 2, **characterized in** the two anchor bolts (4) contain a thread at least at their upper region.

6. Dispositif according to claim 5, **characterized by** joint blocks (5) which are mounted conjointly on an axis (5.1) and which are attached to the threaded portions of the anchor bolts (4) and the threaded bars (2 ; 3).

7. Dispositif according to claim 6, **characterized in that** the joint blocks (5) are mounted conjointly on the axis (5.1) safeguarded by snap ring (5.2).

8. Dispositif according to one of the claims 5 to 7 **characterized by** hinge plates (5) which are fastened to the threaded portions of the anchor bolts (4) and to the threaded bars (2 ; 3), which hinge plates (5) consist of two hinge plate portions (8.1 and 8.2), which are pivotally connected by means of a bending part (8.3) and which contain each a borehole (8.11 and 8.21) respectivally and are fastened to the anchor bolts (4) and the threaded bars (2 ; 3) safeguarded by screw nuts (6).

9. Dispositif according to claim 1, **characterized by** a free of play performance of the joints.

10. Dispositif according to one of the claims 1 to 7, **characterized in that** the g-Sensor (9) is constructed hermetically tight.

## Revendications

1. Dispositif pour mesurer une altération de la distance spatiale entre deux points de mesure stationnairement ancrés, contenant
- deux éléments de fixation qui sont ancrés à distance et forment les deux points de mesure et
- un appareil de mesure (1) qui peut être attaché aux éléments de fixation et qui mesure une altération translationnelle de la distance entre les deus éléments de fixation,
**caractérisé en ce**
- **que** les éléments de fixation sont des tirants (4) qui peuvent étre ancrés dans le sous-sol solide
- **que** l'appareil de mesure contient un g-détecteur à haute résolution et deux barres (2 ; 3)
- qui sont reliées pivotantement entre elles par un joint articulé (c)
- **que** la premiere barre (2) est pivotantement attachée à un des tirants (4) par un joint articulé (b)
- **que** le deuxieme tiges (3) est pivotantement attachée à l'autre tirant (4) par un joint articulé (a),
- tellement que l'altération translationelle entre les tirants (4) est transformable en des mouvements basculants et pivotants, et
- **que** le g-détecteur à haute résolution est monté à l'appareil de mésure dans une position prédéterminée

2. Dispositif selon revendication 1, **caracterisé en ce que** les deux barres (2 ; 3) sont barres filetées.

3. Dispositif selon revendication 1 ou 2, **caractérisé en ce qu'**un transmetteur est attribué au g-détécteur pour transmettre un signal d'alarme à un élément de surveillance quand une dérivations du g-détécteur de la position prédéterminée est mesurée.

4. Dispositif selon revendication 1 à 3, **caracterisé en ce que** le g-détécteur est fixé à la barre (2) par un adapteur (7).

5. Dispositif selon revendication 2, **caracterisé en ce que** les deux tirants (4) ont un filet au moins dans leur région supérieure.

6. Dispositif selon revendication 5, **caractérisé par** des blocs articulés (5) qui sont attachés aux parties filetées des tirants (4) et aux tiges filetées (2 ; 3) et qui sont montées es sur un axe commun (5.1).

7. Dispositif selon revendication 6, **caracterisé en ce que** les blocs articulés (5) sont montés sur l'axe commun (5.1) assurés par des circlips (5.2).

8. Dispositif selon l'une des revendications 5 à 7, **caractérisé par** des plaques de charnière (5) qui sont fixées aux parties filetées des tirants (4) et aux tiges filetées (2 ; 3) et qui existent des deux parties des plaques de charnière (8.1 et 8.2) qui sont connectées en charnière par un élément de pliage (8.3) et ont un alésage (8.11 respectivement 8.21) et qui sont fixées aux tirants (4) et aux tiges filetées (2 ; 3) assurées par des écrons.

9. Dispositif selon revendication 1, **caracterisé par** une réalisation des joints sansjeu.

10. Dispositif selon l'une des revendications 1 à 7, **caracterisé en ce que** le g-détecteur es réalisé hermétiquement.
